Europäisches Patentamt

European Patent Office

Office européen des brevets

(19)

(11) Veröffentlichungsnummer: **0 045 456**
**A2**

(12) # EUROPÄISCHE PATENTANMELDUNG

(21) Anmeldenummer: **81105844.5**

(22) Anmeldetag: **23.07.81**

(51) Int. Cl.³: **G 01 B 17/00**
//G01N29/00

(30) Priorität: **02.08.80 DE 3029444**

(43) Veröffentlichungstag der Anmeldung:
**10.02.82** Patentblatt **82/6**

(84) Benannte Vertragsstaaten:
**AT BE CH DE FR GB IT LI NL SE**

(71) Anmelder: **Ballhaus, Heribert**
**Murgstrasse 21**
**D-7517 Waldbronn(DE)**

(72) Erfinder: **Ballhaus, Heribert**
**Murgstrasse 21**
**D-7517 Waldbronn(DE)**

(74) Vertreter: **Kraus, Walter, Dr. et al,**
**Patentanwälte Dres. Kraus & Weisert Irmgardstrasse 15**
**D-8000 München 71(DE)**

(54) Oberflächenabtastgerät.

(57) Mit der Erfindung wird ein berührungslos mit Ultraschall arbeitendes Oberflächenabtastgerät zur Verfügung gestellt, das einen Ultraschallsender 10 aufweist, der unter einem vorbestimmten Winkel α zur Oberflächennormalen 39 der abzutastenden Oberfläche 13 einen Ultraschalldauerton sendet, so daß sich eine stehende Ultraschallwelle bildet; und einen Ultraschallempfänger 11, der bezüglich der Oberflächennormalen 39 symmetrisch zum Ultraschallsender 10 angeordnet ist. An dem Ultraschallempfänger 11 werden unterschiedliche Ultraschallsignalpegel in Abhängigkeit davon hervorgerufen, in welchem Maße die aktuelle Reflexionsstelle 7 der Ultraschallwelle in Richtung zum Ultraschallempfänger 10 hin oder vom Ultraschallempfänger 10 weg von einer Bezugslinie 42 abweicht.

FIG. 1

1

# B E S C H R E I B U N G

Die Erfindung betrifft ein berührungslos mit Ultraschall arbeitendes Oberflächenabtastgerät, das auch zur Aufnahme von Profilschnitten und für große Bezugslängen geeignet ist, insbesondere bei Oberflächen, deren Abweichungen von einer Bezugslinie im Millimeterbereich liegen.

Bei den in der Oberflächenmeßtechnik bekannten Geräten mit berührender Abtastung, zum Beispiel dem "Perthometer", wird eine Abtastnadel über die zu prüfende Oberfläche geführt, und der Hub der Abtastnadel wird kapazitiv, induktiv oder piezoelektrisch in ein elektrisches Signal umgewandelt. Der Meßbereich dieser Geräte, die im allgemeinen einen Profilschnitt der abgetasteten Oberfläche liefern, überschneidet sich zwar mit dem des erfindungsgemäßen Geräts, jedoch eignen sich diese bekannten Geräte, weil sie auf berührender Abtastung basieren, in vielen Fällen nicht, wie beispielsweise in den Fällen, in denen sich die abzutastende Oberfläche relativ schnell bewegt, wie es die Oberfläche eines sich bewegenden Förderbandes ist, oder in den Fällen, in denen die Oberfläche empfindlich ist, wie es zum Beispiel eine frischlackierte Oberfläche ist.

Es sind darüberhinaus auch Oberflächenabtastgeräte bekannt, die mit berührungsloser Abtastung arbeiten. Eine Art solcher Geräte sind sogenannte "Interferenzmikroskope", die mit Interferenz von sichtbarem Licht arbeiten; diese Geräte liefern im allgemeinen keinen Profilschnitt, sondern nur eine Art "Höhenkarte" mit hoher Auflösung kleinster Rauhtiefen. Die Unterschiede zwischen den einzelnen Geräten liegen vor allem in der Methode, wie die Interferenzerscheinungen herbeigeführt werden. Es sind auch nicht alle diese Geräte für die berührungslose Abtastung geeignet, denn teilweise müssen Hilfsmittel, wie Prismen u.ä., mit dem Werkstück in direkten Kontakt gebracht werden. Die Interferenzmikroskopie konkurriert vom Meßbereich her nicht mit der Erfindung, und abgesehen hiervon ist die Interferenzmikroskopie nicht für Profilschnittmessungen geeignet sowie wegen ihrer extremen Empfindlichkeit nicht unter rauhen Umgebungsbedingungen einsetzbar, wie sie zum Beispiel bei Oberflächenuntersuchungen von Grubenförderbändern gegeben sind.

Zur berührungslosen Abtastung sind in der Oberflächenmeßtechnik ferner pneumatische Geräte bekannt. Ihre Funktion beruht auf der Änderung der Austrittsgeschwindigkeit von Luft aus einer Düse, wenn diese nahe genug an einer technischen Oberfläche vorbeigeführt wird. Hierbei wird die Austrittsgeschwindigkeit der Luft indirekt durch eine Druckabfallmessung im Zufuhrkanal zu der Düse ermittelt. Der Meßbereich dieser Geräte überschneidet sich zwar mit dem der Erfindung, jedoch sind diese Geräte sehr ungenau, da sie sehr empfindlich für Druckschwankungen sind, sie sind weiterhin träge und erfordern einen hohen mechanischen Aufwand; darüberhinaus sind die pneumatischen Geräte, weil ihre Düse relativ nahe an die zu prüfende Oberfläche herangebracht werden muß, nicht für Material geeignet, das große Dickenschwankungen haben kann, zum Beispiel infolge Beschädigung halb herausgerissene Materialteile. Ihre Kennlinie ist nichtlinear und verläuft nach einer Wurzelfunktion, so daß eine elektrische Linearisierung zusätzliche Kosten erfordern würde.

Zur berührungslosen Messung kleiner Abstände sind weiterhin kapazitive und induktive Geber bekannt. Ihre Anwendung unterliegt jedoch einer Reihe von Einschränkungen hinsichtlich der Beschaffenheit und der physikalischen Eigenschaften der Werkstücke, da sie nur für elektrisch leitende oder mit einer elektrisch leitenden Schicht versehene Werkstücke

3

geeignet sind; wegen der Feuchtigkeitsabhängigkeit der Dielektrizitätskonstanten ergeben sich weiter Schwierigkeiten.

Ferner benutzt man, zum Beispiel in der Phototechnik, zur Abstandsmessung Ultraschall, wobei die Laufzeit eines Impulses bei gegebener Schallgeschwindigkeit ein direktes Maß für die gesuchte Entfernung ist. Diese Verfahren sind jedoch sehr ungenau und für relativ kurze Entfernungen, wie sie bei der Oberflächenabtastung auftreten, nicht geeignet.

Außerdem sind in der zerstörungsfreien Werkstoffprüfung Ultraschallgeräte zur Schichtdickenmessung und Rißprüfung im Gebrauch. Gemessen wird die Intensität und/oder die Laufzeit eines reflektierten Signals bzw. einer Signalfolge. Von der Erfindung unterscheiden sich diese Geräte zum einen dadurch, daß Fehler im Inneren der Werkstücke geortet werden sollen und daher Reflexionen an der Oberfläche unbedingt zu vermeiden sind, weswegen die Wandler fest an das Werkstück angekoppelt werden, zum anderen dadurch, daß diskontinuierliche breitbandige Signale gesendet werden, um die Ausbildung stehender Wellen im Werkstück zu unterbinden.

Aufgabe der Erfindung ist es demgegenüber, ein Meßgerät für die völlig berührungslose Abtastung der Kontur einer Oberfläche zu schaffen, das insbesondere innerhalb eines Meßbereichs von einigen zehntel Millimetern bis zu einigen Millimetern arbeitet, das einen sehr einfachen Aufbau besitzt und günstige Herstellungskosten ermöglicht, sowie unter rauhen Betriebsbedingungen arbeitet, und zwar sollen mit dem erfindungsgemäßen Oberflächenabtastgerät allgemein beliebige Oberflächen untersucht werden können, zum Beispiel unabhängig davon, ob sie elektrisch leitend oder nichtleitend sind, oder ob sie sich langsam oder schnell oder überhaupt nicht bewegen; außerdem soll die untersuchte Oberfläche durch den Abtastvorgang nicht beeinträchtigt werden (zum Beispiel eine frisch lackierte Oberfläche).

Diese Aufgabe wird mit einem Oberflächenabtastgerät der eingangs genannten Art gelöst, das einen Ultraschallsender aufweist, der unter einem vorbestimmten Winkel zur Oberflächennormalen der abzutastenden Oberfläche einen Ultraschalldauerton sendet, so daß sich eine stehende Ultraschallwelle bildet; und einen Ultraschallempfänger, der bezüglich der Oberflächennormalen symmetrisch zum Ultraschallsender angeordnet ist, so daß an dem Ultraschallempfänger unterschiedliche Ultraschallsignalpegel in Abhängigkeit davon, in welchem Maße die aktuelle Reflexionsstelle der Ultraschallwelle in Richtung zum Ultraschallempfänger hin oder vom Ultraschallempfänger weg von der Bezugslinie abweicht, hervorgerufen werden.

Insbesondere ist das Oberflächenabtastgerät so ausgebildet, daß der Ultraschallsender und der Ultraschallempfänger gegenseitig schwingungstechnisch entkoppelt in einer gemeinsamen Hosenkammer untergebracht und längs ihren Wirkungslinien, die sich außerhalb der Hosenkammer schneiden, verschiebbar angeordnet sind.

Eine bevorzugte Ausführungsform der Erfindung zeichnet sich dadurch aus, daß der Ultraschallsender und der Ultraschallempfänger je einen piezoelektrischen Wandler aufweisen und der Ultraschallsender auf der Eigenfrequenz des Ultraschallempfängers betrieben wird. Dadurch, daß die Eigenfrequenzen des Ultraschallsenders und -empfängers gleich gemacht werden, kommt man mit einer geringen Senderleistung aus und erzielt wegen der Schmalbandigkeit der verwendeten Ultraschallwandler eine hohe Störunterdrückung. Vorzugsweise ist das Oberflächenabtastgerät dabei so ausgebildet, daß der Ultraschallsender und der Ultraschallempfänger oder deren Ultraschallwandler zur optimalen Anpassung der Wellenlänge an das jeweilige Meßproblem durch Herausnehmen ihrer Halterung, insbesondere durch Herausdrehen ihrer Hülsen, gegen solche mit einer anderen Eigenfrequenz austauschbar sind. Dadurch .

5

kann man jeweils eine neue Eigenfrequenz wählen.

Eine weitere besonders bevorzugte Ausbildung des erfindungsgemäßen Oberflächenabtastgeräts zeichnet sich dadurch aus, daß zur gegenseitigen schwingungstechnischen Entkopplung des Ultraschallsenders und des Ultraschallempfängers in der Hosenkammer in letztere Buchsen aus einem Material, das einen gegenüber dem Material der Hosenkammer signifikant unterschiedlichen Elastizitätsmodul besitzt, befestigt, insbesondere einklebt, sind, in die ein Feingewinde geschnitten ist, in welches Halterungen, insbesondere Hülsen, eingeschraubt sind, die ihrerseits aus einem Material bestehen, das einen gegenüber dem Material der Buchsen anderen Elastizitätsmodul besitzt, und die den Ultraschallsender bzw. den Ultraschallempfänger bzw. deren Ultraschallwandler aufnehmen.

Außerdem kann das Oberflächenabtastgerät so ausgebildet sein, daß koaxial zur Wirkungslinie des Ultraschallempfängers ein Tricher auswechselbar und längsverschieblich angeordnet ist, durch dessen Öffnungsradius das Auflösungsvermögen des Oberflächenabtastgeräts hinsichtlich der Mittelungsfläche in vorbestimmten Grenzen beeinflußbar ist.

Der elektronische Teil des Oberflächenabtastgeräts weist senderseitig einen frequenz- und amplitudenstabilisierten Oszillator, der ein Sinussignal liefert, und empfängerseitig einen Demodulator und ein Kennlinienglied auf. Der Demodulator kann im einfachsten Fall ein Operationsverstärker mit einer Diode in der Rückführung sein. Das Kennlinienglied kann, wenn eine Nichtlinearität der Anzeige in Kauf genommen wird, auch wegfallen. Ausgangsseitig ist ein Anzeige- und/oder Aufzeichnungsgerät vorgesehen.

Um den Meßbereich des Oberflächenabtastgeräts von einer viertel auf eine halbe Wellenlänge auszudehnen, kann die

6

Demodulation des Signals des Ultraschallempfängers phasenempfindlich erfolgen.

Die Eichung des Oberflächenabtastgeräts geschieht im einfachsten Fall mit Hilfe einer Maßtreppe.

Das erfindungsgemäße Gerät eignet sich je nach benutzter
Wellenlänge zur Messung der Abweichungen der jeweiligen
Oberfläche von einer Bezugslinie bis in die Größenordnung
mehrerer Millimeter.

Das Meßproblem kann zum Beispiel die Messung großer Rauhtiefen, die Dicke eines Belags auf sonst glatten Oberflächen, die Ausdehnung und Tiefe von Oberflächenverletzungen
an Gummifördergurten, die Kontrolle von Sollkonturen, wie
etwa die Kontrolle der Lauffläche eines Autoreifens, die
Überwachung der richtigen Position von Werkstücken und ähnliches sein.

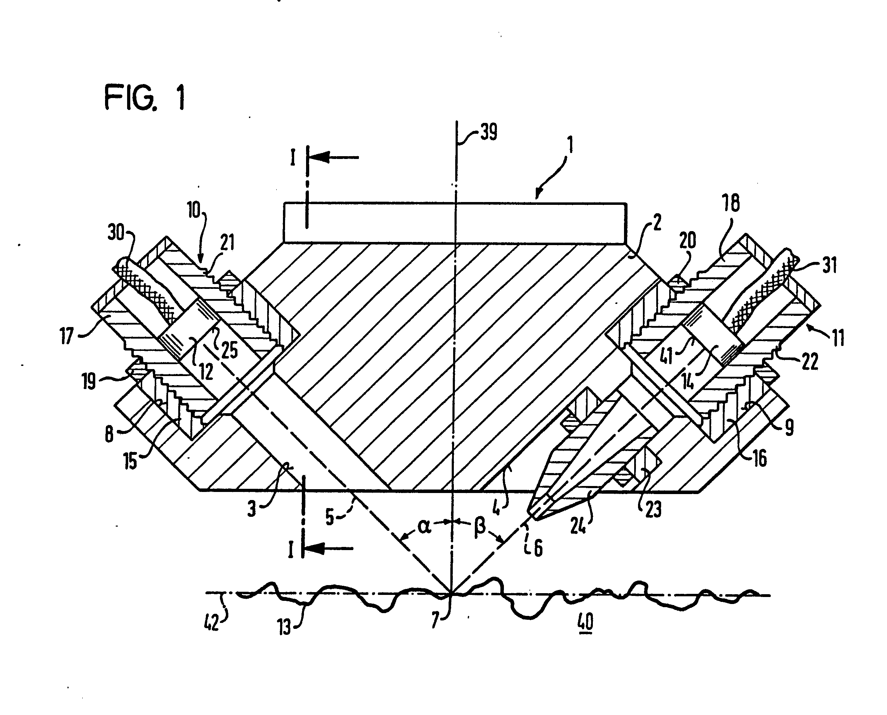

Die Erfindung sei nachstehend anhand einer in den Figuren 1
bis 5 der Zeichnung im Prinzip dargestellten, besonders bevorzugten Ausführungsform näher erläutert; es zeigen:

Figur 1 einen Schnitt durch einen Meßkopf eines erfindungsgemäßen Oberflächenabtastgeräts gemäß der Linie II-II
der Figur 2, gesehen in Pfeilrichtung;

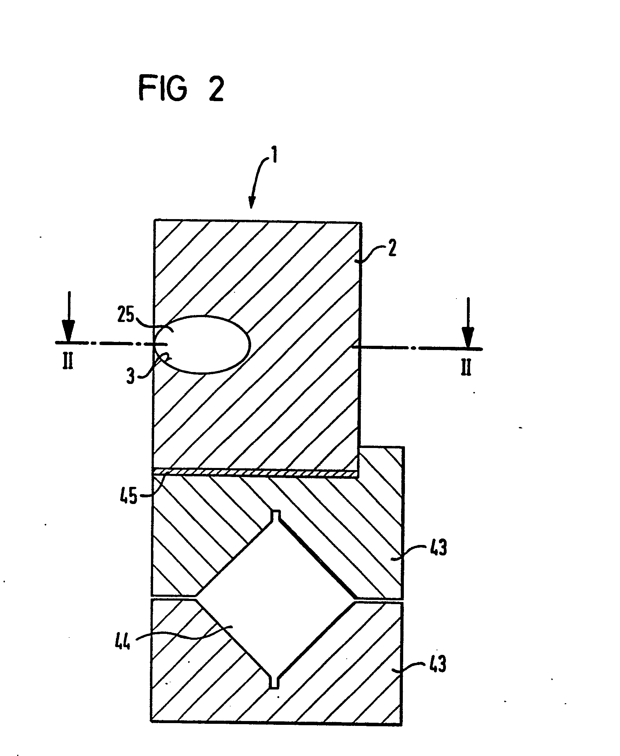

Figur 2 einen Schnitt durch den in Figur 1 dargestellten
Meßkopf längs der Linie I-I, gesehen in Pfeilrichtung, wobei außerdem noch ein Führungsschlitten im Schnitt dargestellt ist, auf welchem der Meßkopf befestigt ist, sowie
eine Führungsschiene, auf der der Führungsschlitten bewegbar angebracht ist;

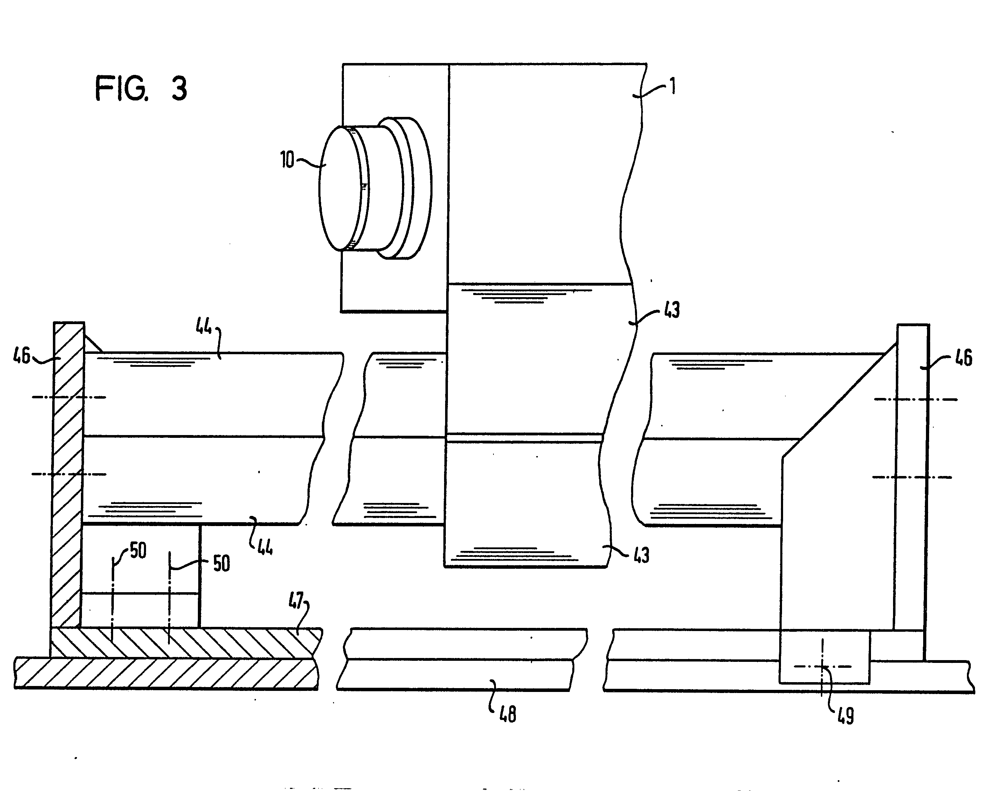

Figur 3 eine Seitenansicht des Meßkopfes, des Führungsschlittens und der Führungsschiene der Figuren 1 und 2

*7*

im zusammengebauten Zustand, in dem sie als bauliche Einheit an eine Bandtrommel angebaut werden können;

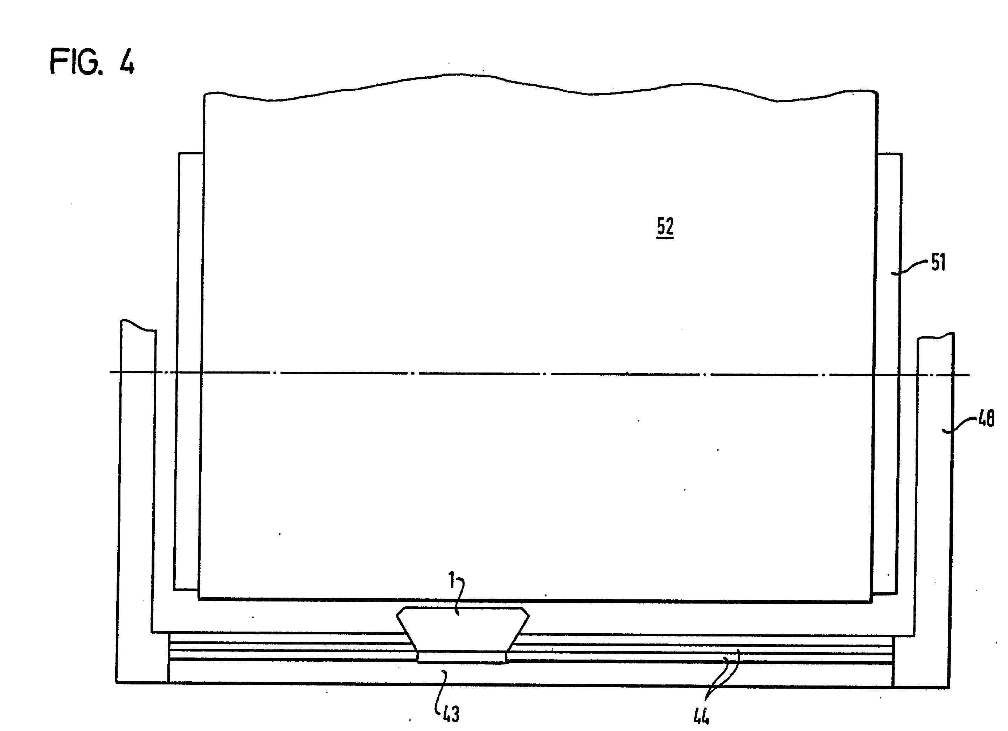

Figur 4 die in Figur 3 gezeigte bauliche Einheit in ihrem an einer Bandtrommel angebauten Zustand; und

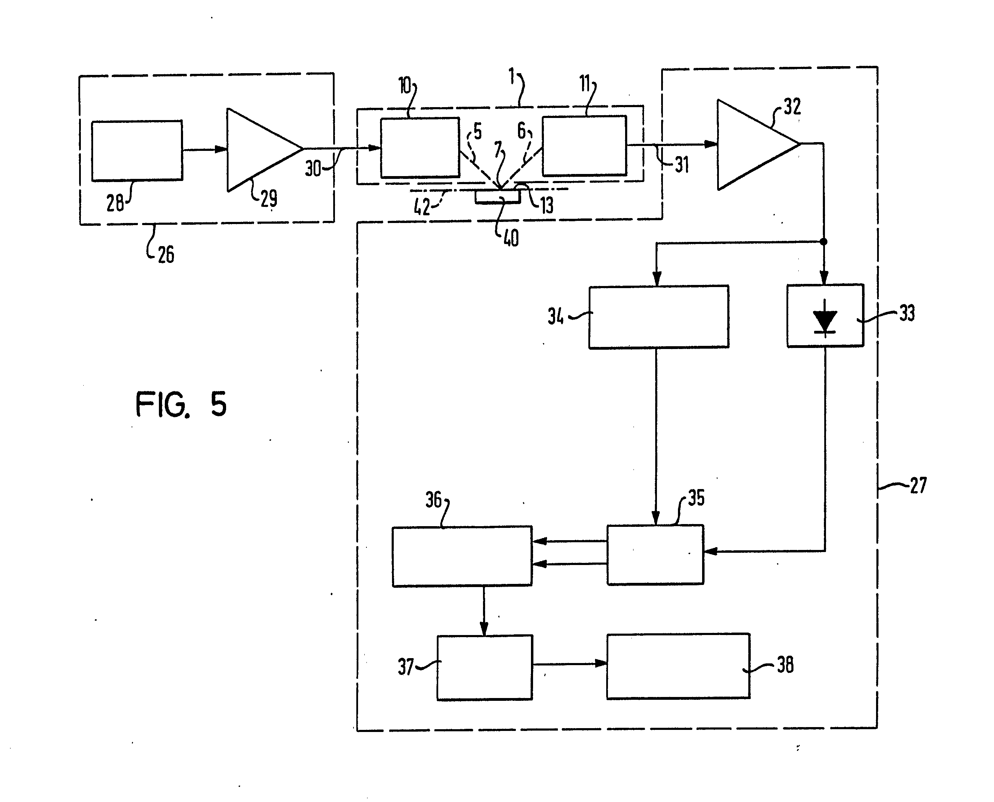

Figur 5 eine Blockdarstellung eines gesamten Oberflächenabtastgeräts nach der Erfindung.

Es sei zunächst auf Figur 1 Bezug genommen, die den Aufbau eines vollständigen Meßkopfes 1 zeigt. Dieser Meßkopf weist als Grundteil eine Hosenkammer 2 auf, die aus einem Materialblock, beispielsweise einem Aluminiumblock, besteht, in dem zwei, vorzugsweise zylindrische, Bohrungen 3 und 4 vorgesehen sind, die in Richtung zur Meßstelle 7 offen sind und deren Längsachsen 5 und 6 sich an der Meßstelle 7 schneiden.

Jede der beiden Bohrungen 3, 4 geht an ihrem der Meßstelle 7 abgewandten Ende in je eine im Durchmesser vergrößerte zur Bohrung 3 bzw. 4 konzentrische Bohrung 8 bzw. 9 über. In die Bohrung 8 ist ein Ultraschallsender 10 eingesetzt, dessen Wirkungslinie mit der Mittelachse 5 zusammenfällt. In entsprechender Weise ist in die Bohrung 9 ein Ultraschallempfänger 11 eingesetzt, dessen Wirkungslinie mit der Längsachse 6 der Bohrung 4 zusammenfällt. Unter der "Wirkungslinie" des Ultraschallsenders ist die Mittelachse der abgestrahlten Ultraschallwelle zu verstehen, während unter der "Wirkungslinie" des Ultraschallempfängers 11 die Mittelachse der empfangenen Ultraschallwelle zu verstehen ist.

Der Ultraschallsender 10 weist einen piezoelektrischen Ultraschallwandler 12 auf, der einen Ultraschalldauerton in Richtung einer zu prüfenden Oberfläche 13 abstrahlt, und

8

der Ultraschallempfänger 11 besitzt einen piezoelektrischen Ultraschallwandler 14, der die empfangenen Ultraschallsignale in elektrische Signale umwandelt. Die Ultraschallwandler 12 und 14 sind vorzugsweise baugleich und von handelsüblicher Ausführung.

Der Ultraschallsender 10 und der Ultraschallempfänger 11 sind gegenseitig schwingungstechnisch entkoppelt in der Hosenkammer 2, die ein gemeinsames Gehäuse für beide bildet, untergebracht. Zu dieser schwingungstechnischen Entkopplung sind in der Hosenkammer 2 Buchsen 15, 16 befestigt, die beispielsweise aus Polyvinylchlorid bestehen und in ihre Bohrung 8 bzw. 9 eingeklebt sind. In jeder dieser Buchsen ist je eine Halterung 17 bzw. 18 eingeschraubt, die den eigentlichen Ultraschallsender bzw. -empfänger aufnimmt, nämlich im vorliegenden Fall den Ultraschallwandler 12 bzw. 14. Die Halterung 17, 18 kann beispielsweise je eine Hülse aus Stahl und in die zugehörige Buchse 15, 16 eingeschraubt sein. Dadurch, daß die aneinander angrenzenden Materialien der Hosenkammer 2, der Buchsen 15 bzw. 16 und der Halterung 17 bzw. 18 deutlich unterschiedliche Elastizitätsmodule haben, wird an den Übergangsstellen eine schwingungsmäßige "Fehlanpassung" und damit eine schwingungstechnische Entkopplung erreicht.

Die beiden Ultraschallwandler sind verschiebbar längs der jeweiligen Längsachse 5 bzw. 6 angeordnet. Eine solche Verschiebung kann im vorliegenden Fall dadurch erreicht werden, daß die Halterungen 17, 18 in unterschiedlich starkem Maße in ihre Buchse 15 bzw. 16 eingeschraubt und in der vorgesehenen Stellung mittels einer Gegenmutter 19 bzw. 20 fixiert werden, die auf das Außengewinde 21 bzw. 22 der jeweiligen Halterung 17, 18 aufgeschraubt ist.

Vor dem Ultraschallempfänger 11 ist in der Bohrung 4 über eine Buchse 23, die beispielsweise aus Polyvinylchlorid be-

9

steht, ein auswechselbarer Trichter 24 eingeschraubt, der beispielsweise aus Aluminium besteht und so angebracht ist, daß seine sich erweiternde Trichteröffnung dem Ultraschallempfänger 11 zugewandt ist. Dieser Trichter 24 hat den Zweck, empfängerseitig einen begrenzten Teilstrahl der an der Meßstelle 7 reflektierten Ultraschallwelle auszublenden, so daß dadurch die Meßstelle 7 auf eine kleine Teilfläche der gesamten mit Ultraschall bestrahlten Oberfläche 13 begrenzt wird. Durch Variation der Trichteröffnung kann die Auflösung des Oberflächenabtastgeräts in gewissen Grenzen gesteuert werden.

Die Bohrung 3 ist allgemein zylindrisch, weil das fertigungstechnisch am einfachsten ist und weil man auf diese Weise eine geführte Ultraschallwelle erhält. Dadurch kommt es auf die geometrische Ausbildung der Abstrahlfläche 25 des Ultraschallsenders 10 nicht wesentlich an.

Der elektronische Teil des Oberflächenabtastgeräts umfaßt, wie die Figur 5 zeigt, in der eine Blockdarstellung einer bevorzugten Ausführungsform des vollständigen Oberflächenabtastgeräts dargestellt ist, ein elektrisches Sendegerät 26 in Form eines elektrischen Signalgenerators und ein elektrisches Empfangsgerät 27.

Das Sendegerät 26 weist einen Oszillator 28 auf, dem ein Leistungsverstärker 29 nachgeschaltet ist, dessen Ausgang über ein Kabel 30 an den Ultraschallsender 10 angekoppelt ist.

Der elektrische Signalausgang des Ultraschallempfängers 11 ist über ein Kabel 31 mit dem Eingang des Empfangsgeräts 27 verbunden. Dieser Eingang wird von einem Signalverstärker 32 gebildet, an dessen Ausgang ein Amplitudendemodulator 33 und ein Phasendetektor 34 angekoppelt sind. Das am Ausgang des Amplitudendemodulators 33 erhaltene gleichgerichtete Signal und das vom Phasendetektor 34 abgegebene Phasensignal werden in einem Analog-zu-Digital-Wandler 35 über je einen Kanal desselben digitalisiert, und die digitalisierten Ausgangssignale werden einem Kennliniengled 36 eingegeben. Letzteres besteht zum Beispiel aus einem digitalen Speicher und einem digitalen Rechenwerk, wodurch die ursprünglich mehrdeutige nichtlineare Kennlinie in eine eindeutige lineare Kennlinie umgewandelt wird. Das Ausgangssignal des Kennliniengleds 36 kann mittels eines nachgeschalteten Digital-zu-Analog-Wandlers 37 wieder in ein Analogsignal umgewandelt und einem Anzeige- und/oder Aufzeichnungsgerät 38 zugeführt werden.

Es sei nun kurz die Wirkungsweise des Oberflächenabtastgeräts erläutert:

Der Ultraschallsender 10 sendet unter einem vorbestimmten Winkel $\alpha$ zur Oberflächennormalen 39 (siehe Figur 1) der abzutastenden Oberfläche 13 einen Ultraschalldauerton. Die Messung beruht nun auf der Tatsache, daß sich infolge der nahezu vollständigen Reflexion des Ultraschalls an der Phasengrenze zwischen der den Ultraschall übertragenden Luft und der Oberfläche 13 des Werkstücks 40 eine stehende Ultraschallwelle zwischen dem Meßkopf 1 und dem Werkstück 40 längs den Wirkungslinien 5, 6 ausbildet. Der Ultraschallempfänger 11, der bezüglich der Oberflächennormalen 39 symmetrisch zum Ultraschallsender 10 angeordnet ist, d.h. dessen Wirkungslinie 6 einen Winkel ß mit der Oberflächennormalen 39 einschließt, der gleich dem Winkel $\alpha$ ist, empfängt die im Meßpunkt 7 reflektierte Ultraschallwelle. Der Ultraschallsignalpegel an der Empfangsfläche 41 des Ultraschallempfängers 11 hängt davon ab, in welchem Maße die aktuelle Reflexionsstelle 7 der Ultraschallwelle in Richtung zum Ultraschallempfänger 11 hin oder vom Ultraschallempfänger 11

11

weg von der Bezugslinie 42 abweicht, auf die der Schnittpunkt der beiden Wirkungslinien 5, 6 einjustiert ist.

Wird der Ultraschallempfänger 11 längs seiner Wirkungslinie 6 verschoben, so zeigt das empfangene Ultraschallsignal
eine ausgeprägte Amplitudenschwankung. Der Zusammenhang
zwischen Weg und Amplitude ist sinusförmig. Die Phasendifferenz zwischen Ultraschallsender- und -empfängersignal erhöht sich zwischen zwei am Ultraschallempfänger registrierten hintereinanderliegenden Amplitudenmaxima um $\pi$. Ist die
Lage des Ultraschallempfängers 11 bezüglich der Oberfläche
13 fixiert und ändert sich die Lage der reflektierenden
Oberfläche 13 gegenüber der Bezugslinie 42 bzw. dem Schnittpunkt der Wirkungslinien 5 und 6, so ändert sich die Ultraschallamplitude an der Empfangsfläche 41 in genau der gleichen Weise. Hierdurch sind Abstandsänderungen bis zu einer
viertel Wellenlänge eindeutig feststellbar. Diese viertel
Wellenlänge ergibt sich aus der Mehrdeutigkeit der Spannungsmessung, die daran liegt, daß der Ultraschallwandler
14 Druckschwankungen aufnimmt.

Durch phasenempfindliche Demodulation des vom Ultraschallempfänger 11 gelieferten Signals kann der eindeutige Meßbereich auf eine halbe Wellenlänge verdoppelt werden.

In der in Figur 2 gezeigten baulichen Ausführungsform ist
der Meßkopf 1 verschiebbar gelagert, indem die Hosenkammer
2 auf einen geteilten Führungsschlitten 43 geschraubt ist,
der auf einer Führungsschiene 44 gleitet, die vorliegend
die Form einer geschliffenen Prismenschiene hat. Zur Dämpfung
von Störungen, die durch das Gleiten auf der Führungsschiene 44 angeregt werden könnten, ist eine elastische Zwischenschicht 45 vorgesehen.

*12*

Die Figur 3 zeigt den Aufbau der Figur 2 in einer Ausführung, in der er an eine Bandtrommel angebaut werden kann. Die Führungsschiene 44 ist mit Seitenwangen 46 verschraubt, die ihrerseits fest mit einer Grundplatte 47 verbunden sind. Gegenüber dem Bandtrommelrahmen 48 erfolgt die Justierung in horizontaler Richtung durch Schrauben 49, von denen nur die auf der rechten Seite angedeutet ist, und in vertikaler Richtung durch Schrauben 50; von diesen Schrauben sind jeweils nur die Achsen eingezeichnet. Auf der Führungsschiene 44 gleitet der Führungsschlitten 43 mit dem Meßkopf 1.

Nicht dargestellt ist ein potentiometrischer Wegaufnehmer, mit dessen Hilfe der Zusammenhang des Signals des Ultraschallempfängers mit dem geometrischen Ort des Ultraschallwandlers 14 bzw. der Meßstelle 7 erfaßt und auf einem geeigneten X-Y-Schreiber dargestellt werden kann.

Die Figur 4 zeigt schematisch die in Figur 3 dargestellte Anordnung in ihrem an eine Bandtrommel 51 angebauten Zustand. Über diese Bandtrommel, die in dem Bandtrommelrahmen 48 gelagert ist, läuft ein Gummifördergurt 52. Am Bandtrommelrahmen 48 ist die in Figur 3 gezeigte Anordnung so montiert, daß der Meßkopf 1 genau im Scheitel der Bandtrommel 51 über deren ganze Breite über den Gummifördergurt 52 hinweggeführt werden kann.

Unter einer "Bezugslinie" ist eine gedachte Linie zu verstehen, die ein willkürlich festgelegtes Oberflächenniveau der abzutastenden Oberfläche repräsentiert, insbesondere ein "mittleres" Oberflächenniveau, das zwischen dem aktuellen höchsten und tiefsten Oberflächenniveau liegt.

# KRAUS & WEISERT   0045456

PATENTANWÄLTE

UND ZUGELASSENE VERTRETER VOR DEM EUROPÄISCHEN PATENTAMT

WALTER KRAUS DIPLOMCHEMIKER · DR.-ING. ANNEKÄTE WEISERT DIPL.-ING. FACHRICHTUNG CHEMIE

IRMGARDSTRASSE 15 · D-8000 MÜNCHEN 71 · TELEFON 089/79 70 77-79 70 78 · TELEX 05-212156 kpat d

TELEGRAMM KRAUSPATENT

2937   JS/an

DIPL.-ING. HERIBERT BALLHAUS

7517 Waldbronn

Oberflächenabtastgerät

PATENTANSPRÜCHE

1. Berührungslos mit Ultraschall arbeitendes Oberflächenabtastgerät, das auch zur Aufnahme von Profilschnitten und für große Bezugslängen geeignet ist, insbesondere bei Oberflächen, deren Abweichungen von einer Bezugslinie im Millimeterbereich liegen, g e k e n n z e i c h n e t durch einen Ultraschallsender (10), der unter einem vorbestimmten Winkel (ⲁ) zur Oberflächennormalen (39) der abzutastenden Oberfläche (13) einen Ultraschalldauerton sendet, so daß sich eine stehende Ultraschallwelle bildet; und einen Ultraschallempfänger (11), der bezüglich der Oberflächennormalen (39) symmetrisch zum Ultraschallsender (10) angeordnet ist, so daß an dem Ultraschallempfänger (11) unterschiedliche Ultraschallsignalpegel in Abhängigkeit davon, in welchem Maße die aktuelle Reflexionsstelle (7) der Ultraschallwelle in Richtung zum Ultraschallempfänger (11) hin oder vom Ultraschallempfänger (11) weg von der Bezugslinie (42) abweicht, hervorgerufen werden.

2. Oberflächenabtastgerät nach Anspruch 1, dadurch g e k e n n z e i c h n e t , daß der Ultraschallsender (10) und der Ultraschallempfänger (11) gegenseitig schwingungstechnisch entkoppelt in einer gemeinsamen Hosenkammer (2) untergebracht und längs ihren Wirkungslinien (5,6), die sich außerhalb der Hosenkammer (2) schneiden, verschiebbar angeordnet sind.

3. Oberflächenabtastgerät nach Anspruch 1 oder 2, dadurch g e k e n n z e i c h n e t , daß der Ultraschallsender (10) und der Ultraschallempfänger (11) je einen piezoelektrischen Wandler (12,14) aufweisen und der Ultraschallsender (10) auf der Eigenfrequenz des Ultraschallempfängers (11) betrieben wird.

4. Oberflächenabtastgerät nach Anspruch 2 oder 3, dadurch g e k e n n z e i c h n e t , daß zur gegenseitigen schwingungstechnischen Entkopplung des Ultraschallsenders (10) und des Ultraschallempfängers (11) in der Hosenkammer (2) in letztere Buchsen (15,16) aus einem Material, das einen gegenüber dem Material der Hosenkammer (2) signifikant unterschiedlichen Elastizitätsmodul besitzt, befestigt, insbesondere eingeklebt, sind, in die ein Feingewinde geschnitten ist, in welches Halterungen (17,18), insbesondere Hülsen, eingeschraubt sind, die ihrerseits aus einem Material bestehen, das einen gegenüber dem Material der Buchsen (15, 16) anderen Elastizitätsmodul besitzt und die den Ultraschallsender (10) bzw. den Ultraschallempfänger (11) bzw. deren Ultraschallwandler (12,14) aufnehmen.

5. Oberflächenabtastgerät nach einem der Ansprüche 1 bis 4, dadurch g e k e n n z e i c h n e t , daß der Ultraschallsender (10) und der Ultraschallempfänger (11) oder deren Ultraschallwandler (12,14) zur optimalen Anpassung der Wellenlänge an das jeweilige Meßproblem durch Herausnehmen ihrer Halterung (17,18), insbesondere durch Herausdrehen ihrer Hülsen, gegen solche mit einer anderen Eigenfrequenz austauschbar sind.

6.      Oberflächenabtastgerät nach einem der Ansprüche 1 bis 5, dadurch g e k e n n z e i c h n e t , daß die Demodulation des Signals des Ultraschallempfängers (11) phasenempfindlich erfolgt, so daß der Meßbereich des Oberflächenabtastgeräts von einer viertel auf eine halbe Wellenlänge ausgedehnt wird.

7.      Oberflächenabtastgerät nach einem der Ansprüche 1 bis 6, dadurch g e k e n n z e i c h n e t , daß der elektronische Teil (26,27) des Oberflächenabtastgeräts senderseitig einen frequenz- und amplitudenstabilisierten Oszillator (28) und empfängerseitig einen Demodulator (33) und ein Kennlinienglied (36) aufweist.

8.      Oberflächenabtastgerät nach einem der Ansprüche 1 bis 7, dadurch g e k e n n z e i c h n e t , daß koaxial zur Wirkungslinie (6) des Ultraschallempfängers (11) ein Trichter (24) auswechselbar und längsverschieblich angeordnet ist, durch dessen Öffnungsradius das Auflösungsvermögen des Oberflächenabtastgeräts hinsichtlich der Mittelungsfläche in vorbestimmten Grenzen beeinflußbar ist.

9.      Oberflächenabtastgerät nach einem der Ansprüche 1 bis 8, dadurch g e k e n n z e i c h n e t , daß die Justierung des richtigen Abstands des Oberflächenabtastgeräts von einer Bezugslinie (42) automatisch mit Hilfe eines elektronischen Reglers und eines Servomotors erfolgt, wobei als Reglereingangssignal das Meßsignal selbst dient.

FIG. 1

FIG 2

FIG. 3

# FIG. 4

FIG. 5

0045456